**Europäisches Patentamt**

**European Patent Office**

**Office européen des brevets**

(19)

(11) Veröffentlichungsnummer : **0 475 941 B1**

(12)

# EUROPÄISCHE PATENTSCHRIFT

(45) Veröffentlichungstag der Patentschrift :
23.12.92 Patentblatt 92/52

(51) Int. Cl.⁵ : **G06K 15/12**

(21) Anmeldenummer : **90902225.3**

(22) Anmeldetag : **01.02.90**

(86) Internationale Anmeldenummer :
**PCT/EP90/00182**

(87) Internationale Veröffentlichungsnummer :
**WO 91/01532 07.02.91 Gazette 91/04**

(54) ANORDNUNG ZUM ERFASSEN DER STRAHLUNGSENERGIE VON LICHTEMITTIERENDEN HALBLEITERELEMENTEN SOWIE DEREN VERWENDUNG IN EINER ELEKTROFOTOGRAFISCHEN DRUCKEINRICHTUNG.

(30) Priorität : **25.07.89 EP 89113677**

(43) Veröffentlichungstag der Anmeldung :
**25.03.92 Patentblatt 92/13**

(45) Bekanntmachung des Hinweises auf die
Patenterteilung :
**23.12.92 Patentblatt 92/52**

(84) Benannte Vertragsstaaten :
**DE FR GB IT NL**

(56) Entgegenhaltungen :
**WO-A-87/02162**
**PATENT ABSTRACTS OF JAPAN, vol. 9, no.**
**256 (M-421)(1979), 15 October 198; JP-A-60**
**107373**

(56) Entgegenhaltungen :
**PATENT ABSTRACTS OF JAPAN, vol. 13, no.**
**299 (M-847)(3647), 11 July 1989; Jp-A-1 90774**
**PATENT ABSTRACTS OF JAPAN, VOL. 13, NO.**
**60 (M-769)(3408), 10 FEBRUARY 1989; JP-A-63**
**264378**

(73) Patentinhaber : **Siemens Nixdorf**
**Informationssysteme AG**
**Otto-Hahn-Ring 6**
**W-8000 München 83 (DE)**

(72) Erfinder : **MAYER, Klaus, Dipl.-Ing.**
**Hofrichterweg 16**
**W-8000 München 82 (DE)**

(74) Vertreter : **Fuchs, Franz-Josef, Dr.-Ing. et al**
**Postfach 22 13 17**
**W-8000 München 22 (DE)**

EP 0 475 941 B1

**Beschreibung**

In nichtmechanischen Druckeinrichtungen, wie sie z.B. elektrofotografische Druckeinrichtungen darstellen, wird mit Hilfe einer Vielzahl von Lichtelementen eines optischen Zeichengenerators ein aus einzelnen Punkten zusammengesetztes Bild erzeugt. Die Lichtelemente können z.B. Leuchtdioden sein, die zur Erzeugung des Bildes mit impulsförmigen Signalen bestimmter Frequenz hell getastet werden. Da bei einer Vielzahl von LED's auf einem optischen Zeichengenerator wegen der Exemplarstreuung und der Alterung nicht damit gerechnet werden kann, daß die von den LED's emittierte Lichtenergie über die Betriebszeit und von LED zu LED immer gleich ist, ist es notwendig, optische Zeichengeneratoren abzugleichen und dabei die Strahlungsenergie, d.h. die Strahlungsleistung multipliziert mit der Dauer jeder einzelnen Leuchtdiode zu messen und in Abhängigkeit von diesem Meßvorgang abzugleichen, d.h. bezüglich der Lichtenergie anzupassen. Um diesen Abgleich zu automatisieren, wird jede einzelne LED in Abhängigkeit von der gewünschten Strahlungsenergie variabel impulsförmig angesteuert. Die möglichen Variationen sind dabei die Größe des ansteuernden impulsförmigen Signales und was bevorzugt angewendet wird, die Variation des Tastverhältnisses des ansteuernden Stromes.

Bevor z.B. das Tastverhältnis richtig eingestellt werden kann, muß mit einer Meßanordnung für jede einzelne LED die abgebbare Lichtenergie bei einem vorgegebenen Tastverhältnis ermittelt werden, um dann mit einer Korrektureinrichtung die notwendige Variation des Tastverhältnisses durchführen zu können. Die jeweils abgegebene Lichtenergie für jede einzelne LED wird bei konstantem Tastverhältnis mit einer beweglichen Meßanordnung gemessen, bei der mit Hilfe eines motorgetriebenen Schiebers ein Fotoelement über die Leuchtdiodenleiste, d.h. über jede einzelne LED geführt wird.

Eine derartige automatische Abgleichanordnung für den Zeichengenerator einer elektrofotografischen Druckeinrichtung ist aus der US-PS 4 780 731 bekannt.

Der dort beschriebene elektrofotografische Drucker enthält eine Belichtungsenergiekorrektureinrichtung für den eine Leuchtdiodenleiste aufweisenden optischen Zeichengenerator. Bei Aufruf einer Abgleichroutine erfolgt ein automatischer Abgleich der Leuchtelemente dadurch, daß ein Fotoelement die vom Leuchtelement abgegebene Strahlungsleistung erfaßt und einer mit dem Leuchtelement gekoppelten Steuereinrichtung in Form von elektrischen Signalen zuführt. Die programmgesteuerte Einrichtung ordnet dann jedem Leuchtelement eine individuelle Betätigungszeit zu und speichert diese in einem Schaltzeitspeicher ab. Damit liefert später jedes Leuchtelement bei Betätigung dieselbe Strahlungsenergie.

Zum Messen der Strahlungsenergie wird ein extrem flaches Fotoelementbauteil verwendet, das in Form eines Schiebers an jeder einzelnen LED beim Meßvorgang vorbeifährt. Da es von der Strahlung jeder Leuchtdiode sicher getroffen werden muß, ist es außerdem noch sehr großflächig (ca. 1 cm x 0,5 cm). Sehr flache und trotzdem großflächige Fotoelemente haben jedoch den Nachteil, daß sie einerseits nur eine geringe Empfindlichkeit haben und andererseits eine relativ große unerwünschte elektrische Kapazität aufweisen, die das Messen kurzer Lichtblitze erschwert. Darüberhinaus können sich bei einem Wechsel der Fotoelemente die Verhältnisse wesentlich ändern.

Verwendet man Rechteckimpulse als Lichtimpulse, so sind die von dem Fotoelement ausgehenden elektrischen Antwortimpulse stark verändert.

Ermittelt man die Strahlungsleistung bzw. die Strahlungsenergie von lichtemittierenden Halbleiterelementen, wie Leuchtdioden oder dergleichen mittels großflächiger Fotoelemente über einzelne Lichtimpulse bzw. Lichtblitze, so sind die erzielten Ergebnisse ungenau und unter Umständen mit Störungen behaftet.

Aufgabe der Erfindung ist es deshalb eine Anordnung der eingangs genannten Art so auszugestalten, daß die Lichtleistung bzw. die Lichtenergie von lichtemittierenden Halbleiterelementen sicher erfaßt werden kann.

Es ist ein weiteres Ziel der Erfindung eine Anordnung zum Abgleich der Strahlungsenergie der Leuchtdioden eines optischen Zeichengenerators einer elektrofotografischen Druckeinrichtung bereitzustellen, mit der ein sicherer störungsfreier Abgleich des optischen Zeichengenerators möglich ist.

Diese Aufgabe wird bei Anordnungen der eingangs genannten Art gemäß dem kennzeichnenden Teil der Patentansprüche 1 und 5 gelöst.

Vorteilhafte Ausführungsformen der Erfindung sind in den Unteransprüchen gekennzeichnet.

Durch die Anordnung von elektrischen Bauelementen die eine vom Fotoelement in Abhängigkeit von den empfangenen Lichtimpulsen erzeugte elektrische Ausgangssignalfolge erfassen und einen zeitabhängigen Mittelwert daraus bilden, der dann als Maß für die Strahlungsenergie des Halbleiterelementes dient, ist eine sichere Messung der Strahlungsleistung bzw. der Strahlungsenergie möglich.

Dazu muß man von der Vorstellung ausgehen, daß man um die Strahlungsenergie eines Lichtimpulses zu messen nicht nur diesen einen Lichtimpuls verwendet, sondern das zu vermessende Halbleiterelement (Leuchtdiode) mehrere Lichtimpulse der jeweils gleichen Strahlungsenergie einer bestimmten fest vorgegebenen Impulsfrequenz abgeben läßt. Dann erst wird auf die Vermessung der nächsten Leuchtdiode übergegangen.

Verglichen mit der Vermessung eines einzelnen Lichtimpulses kann auf diese Weise außerdem eine stark erhöhte Sicherheit gegen Störspitzen auf dem Meßsignal erwartet werden, da sich eine Einzelstörung auf mehrere Blitze verteilen kann.

Das Signal, das der Lichtsensor (Fotoelement) in der erfindungsgemäßen Anordnung liefert, ist normalerweise sehr klein. Es kann deshalb durch sogenannte Brummstörungen, die von der Netzspannung verursacht werden und durch verschiedenartige andere tieffrequente Störungen verfälscht werden, was die Meßgenauigkeit und damit die Druckbildqualität nachteilig beeinflußt.

Bei einer vorteilhaften Ausführungsform der Erfindung ist deshalb zur Unterdrückung von tieffrequenten Störungen der elektrischen Ausgangssignalfolge eine getastete Potentialsteuerungsanordnung vorgesehen, die ein vorgebbares stabiles (d.h. ungestörtes) Bezugspotential der Einzelsignale der Ausgangssignalfolge festlegt.

Vorteilhafterweise wird die Tastfrequenz der Potentialsteuerungsanordnung derart gewählt, daß sie der Blitzfrequenz oder einer Subharmonischen der Blitzfrequenz entspricht.

Ausführungsformen der Erfindung sind in den Zeichnungen dargestellt und werden im folgenden beispielsweise näher beschrieben. Es zeigen

Figur 1 ein schematisches Blockschaltbild einer Belichtungsenergie-Korrektureinrichtung für den optischen Zeichengenerator einer elektrofotografischen Druckeinrichtung,

Figur 2 ein Blockschaltbild eine Anordnung zum Erfassen der Strahlungsenergie von Leuchtdioden,

Figur 3 ein Blockschaltbild eines Strom-Spannungswandlers in einer Anordnung entsprechend der Figur 2,

Figur 4 ein schematisches Blockschaltbild eines aktiven Tiefpasses mit einer vorgeschalteten getasteten Potentialsteuerung, in einer Anordnung entsprechend der Figur 2,

Figur 5 eine schematische Darstellung des Signalverlaufes innerhalb der Anordnung gemäß Figur 2 und

Figur 6 eine schematische Darstellung der störungsunterdrückenden Wirkung der getasteten Potentialsteuerungsanordnung gemäß Figur 4.

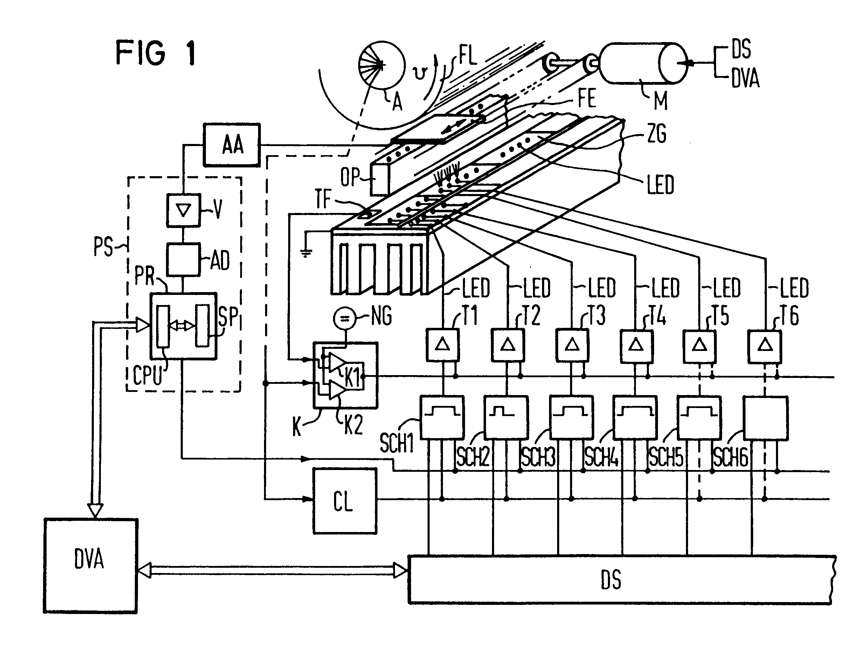

Die in der Figur 1 schematisch dargestellte Belichtungsenergie-Korrektureinrichtung für den optischen Zeichengenerator einer elektrofotografischen Druckeinrichtung wird ausführlicher in der WO-A-8702162 beschrieben.

Dabei werden durch Erregung der Einzelleuchtdioden LED eines Zeichengenerators ZG auf einer mit der Geschwindigkeit v umlaufenden Fotoleitertrommel FL über eine selbstfokussierende Optik OP auf einer Fotoleiterschicht der Fotoleitertrommel FL Bildzeichen erzeugt, die dann in einer hier nicht dargestellten Weise in einer Entwicklerstation entwickelt und in einer Umdruckstation auf Endlospapier übertragen werden. Der darzustellende Text wird dabei von einer zentralen Datenverarbeitungsanlage DVA der Druckersteuerung DS zugeführt.

Da die von einer LED abgegebene Lichtleistung nicht nur von den elektrischen Ansteuerwerten Strom und Spannung abhängt, sondern auch von der Exemplarstreuung und dem Alterungszustand der LED ist es notwendig die Lichtleistung der einzelnen LED untereinander zu korrigieren.

Die Korrekturvorrichtung enthält dabei ein Fotoleiterelement FE das in der Nähe der Oberfläche der Fotoleitertrommel hinter der Fokussierungsoptik OP angeordnet ist. Dieses Fotoelement FE ist mit einem Elektromotor M gekoppelt, der bei Aufruf einer Abgleichroutine, z.B. über die Druckersteuerung DS oder über die zentrale Datenverarbeitungsanlage DVA das Fotoelement FE zeilenweise über die Fokussierungsoptik OP hinwegbewegt. Gleichzeitig werden über die zentrale Druckersteuerung DS die einzelnen Leuchtdioden LED des Zeichengenerators ZG erregt. Die von den einzelnen Leuchtdioden ausgehende Lichtleistung unter Berücksichtigung der gesamten Übertragungsstrecke einschließlich der Fokussierungsoptik OP, erzeugt am Ausgang des Fotoelementes FE ein entsprechendes elektrisches Signal, das einer mit dem Fotoelement FE gekoppelten programmgesteuerten Einrichtung PS zugeführt wird. Die programmgesteuerte Einrichtung enthält einen Verstärker V mit nachgeschaltetem Analog-Digital-Wandler AD zum Umsetzen des analogen, der Lichtenergie entsprechenden Signales in ein digitales Signal. Ein Mikroprozessor PR enthält eine Zentraleinheit ZPU mit zugeordneter Speichereinheit SP. Der Mikroprozessor PR erfaßt über die Zentraleinheit ZPU die der Strahlungsleistung der LED entsprechenden Signale und speichert sie in der Reihenfolge ihrer Abtastung im Speicher SP ab. Aus der so gemessenen Strahlungsleistung der einzelnen LED kann nun durch Zuordnung einer den individuellen Strahlungsleistungen der einzelnen LED angepaßten Betätigungszeit eine einheitliche für alle LED gleichmäßige Strahlungsenergie erzeugt werden. Zu diesem Zweck ordnet der Mikroprozessor PR den einzelnen im Speicher SP gespeicherten Einzelleistungen der pro LED individuelle Betätigungszeiten zu und speichert diese Betätigungszeiten in den der Druckersteuerung DS zugeordneten, einzeln mit den LED verschalteten Schaltzeitspeichern SCH1 bis SCHN. Weiterhin weist die Korrekturvorrichtung eine Kompensationsanordnung K auf, die über entsprechende Fühlelemente der Betriebsparameter der Druckereinrichtung, z.B. Geschwindigkeit V des Aufzeichnungsträgers FL, Betriebstemperatur CF der Leuchtelemente LED erfaßt und abhängig davon die elektrischen Normbetriebsparameter wie Spannung und Stromstärke für sämtliche Leuchtelemente LED einheitlich festlegt und über Treiberstufen T1 bis TN den LED zuführt. Zur Erfassung der Geschwindigkeit V der Fotoleitertrommel FL eine in bekannter Weise ausgestaltete Abtasteinrichtung A und zur Erfassung der Temperatur ein Temperaturfühlelement TF auf dem die LED aufnehmenden Träger. Sowohl der Abtaster A als auch das Temperaturfühlelement TF liefern an die Kompensationsanordnung eine den gemessenen Größen entsprechende Spannung, die an den Komperatoren K1 und K2 mit einer von außen zugeführten einstellbaren Normgleichspannung NG verglichen wird und abhängig von diesem Vergleichsvorgang dann den Ansteuerstrom bzw. die Ansteuerspannung für die Treiberstufen T1 bis TN festlegt. Die Kompensationsanordnung K läßt sich auch gesondert einstellen, z.B. durch Variation der Normgleichspannung NG und unabhängig von deren Betriebsparametern. Das von dem Abtaster gelieferte, der Drehgeschwindigkeit V proportionale Abtastsignal wird gleichzeitig auch einer Takteinrichtung CL zugeführt. In Verbindung mit einem von dieser Takteinrichtung CL gelieferten Taktsignal steuert die zentrale Druckersteuerung DS die LED's des Zeichengenerators ZG Mikrozeile für Mikrozeile an.

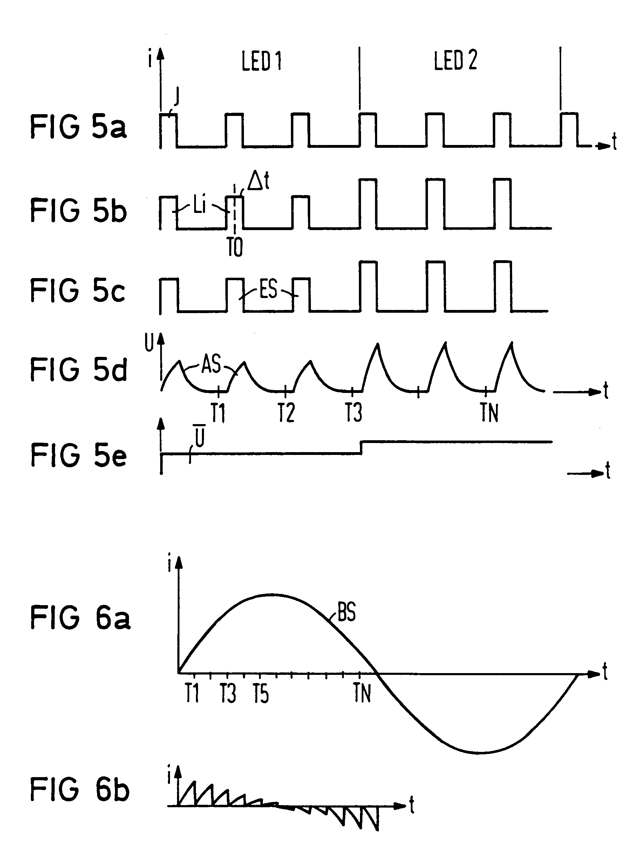

Wie in der Einleitung ausgeführt, wird vor dem eigentlichen Abgleichvorgang die Strahlungsenergie jeder einzelnen LED erfaßt. Zu diesem Zwecke wird über die Druckersteuerung DS entsprechend der Darstellung der Figur 5, Zelle a die Leuchtdiode LED1, deren Strahlungsenergie gemessen werden soll, mit einer Stromimpulsfolge aus Rechtecksignalen I der Stromstärke i in Abhängigkeit von der Zeit t angesteuert. Verwendet man einen Zeichengenerator ZG mit ca. 11000 einzelnen LED's, die bei einem einzigen Abgleichvorgang abgeglichen werden sollen, der in einer Zeit von etwa 30 sec. abgeschlossen sein soll, benötigt man eine Lichtpulsfrequenz von 11,4 Kz, d.h. zur Abtastung einer LED werden etwa 31 Impulse verwendet. Diese Stromimpulsfolge I erzeugt entsprechend der Darstellung Zeile b der Figur 5 eine Lichtimpulsfolge LI aus Einzelimpulsen gleicher Strahlungsenergie und einer konstanten Impulsfolgefrequenz.

Wäre ein elektrisch sich ideal verhaltendes Fotoelement FE vorhanden, so würde dieses Fotoelement FE die Lichtimpulse LI in entsprechende elektrische Signale ES umwandeln (Figur 5, Zeile c), die dann von der Programmsteuereinheit PS erfaßt werden könnten. Die elektrischen Ausgangssignale ES des Fotoelementes haben jedoch einen entsprechend der Figur 5, Zeile d dargestellten sägezahnartigen Verlauf aufgrund des elektrischen Verhaltens des Fotoelementes.

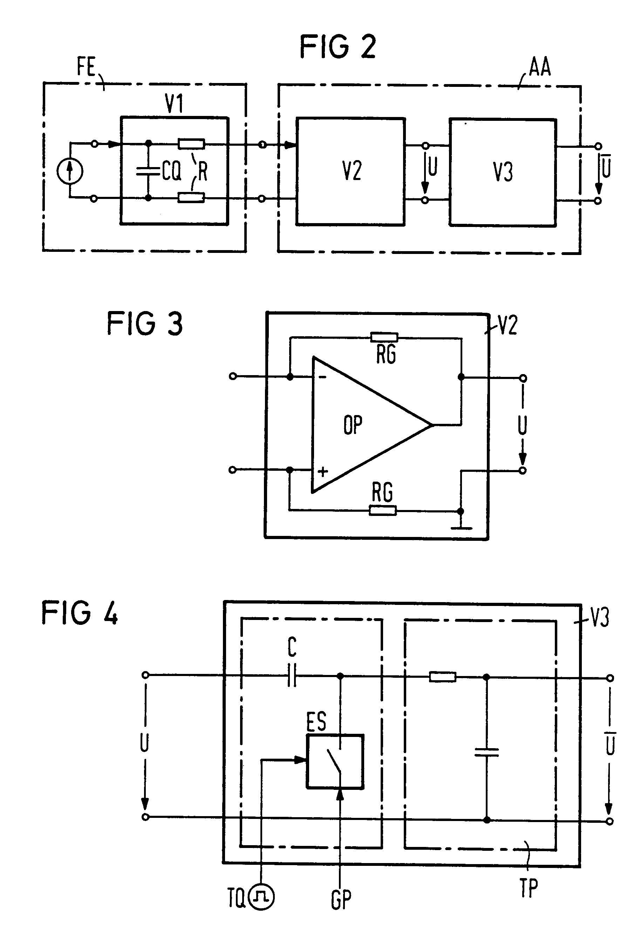

Stellt man entsprechend der Figur 2 das Fotoelement FE als Vierpol dar, so weist das Fotoelement eine unerwünschte große Sperrschichtkapazität CQ auf, die durch die Sperrschicht zwischen positiver und negativer Seite des Fotoelements entsteht. Die Widerstände R bezeichnen dabei Dämpfungswiderstände. Diese sind notwendig, um ein Schwingen des dem Fotoelement FE nachgeschalteten Stromspannungswandlers V2 (Vierpol 2) aufgrund der Sperrschichtkapazität CQ zu verhindern.

Die Sperrschichtkapazität CQ in Verbindung mit anderen störenden Einflüssen hat nun die Folge, daß am Ausgang des Fotoelementes FE das in der Figur 5, Zeile d dargestellte verformte Ausgangssignal AS anliegt. Derartige Ausgangssignale AS sind nun schwer zu verarbeiten und zur Erfassung der Lichtenergie der von dem Fotoelement FE empfangenen Lichtimpulse nur bedingt brauchbar.

Um trotzdem eine optimale Auswertung des Fotoelementsignales ermöglichen zu können, wird eine Anordnung AA (Figur 1) verwendet, die zwischen der programmgesteuerten Einrichtung PS und dem Fotoelement FE angeordnet ist. Die Anordnung AA ist dabei als eine Folge von zwei Vierpolen V2 (Strom/Spannungswandler) und einem Vierpol V3, der als aktiver Tiefpaß ausgebildet ist, dargestellt. Das elektrische Verhalten des Fotoelementes FE repräsentiert sich als Vierpol V1.

Wie bereits ausgeführt, sollen die Lichtimpulse der einzelnen LED's erfaßt werden und zwar die Strahlungsenergie eines einzelnen Impulses, d.h. seine Strahlungsleistung multipliziert mit der Impulsdauer ( txJ). Dabei beträgt die Impulsdauer im Minimum 24 µs. Berechnet man die obige Zeitkonstante des Vierpoles V1, so erhält man bei einem Dämpfungswiderstandwert R von 5 Kiloohm eine Zeitkonstante von 60 µs. Das ist deutlich mehr als die Impulsdauer. Der Strom am Ausgang des Vierpoles V1 ist also immer noch im Ansteigen begriffen, wenn die Impulszeit eines Einzelimpulses schon zu Ende ist. Es steht kein konstantes eingeschwungenes Meßsignal zur Verfügung.

Es wäre zwar denkbar, das Signal an einer bestimmten Stelle abzutasten, jedoch würde man einerseits von dem sowieso sehr kleinen Signal nicht seinen vollen Hub ausnützen, weil man schon früh vor Erreichen des Endwertes messen würde, andererseits streut die Kapazität CQ von Fotoelement zu Fotoelement ziemlich stark (± 30%), so daß das Meßsignal unterschiedlich schnell ansteigen kann und sich dann zu einem Abtastzeitpunkt in einer vom jeweiligen Fotoelement abhängigen Höhe befindet. Außerdem ist die Messung der Impulsdauer auf diese Weise nicht möglich.

Um die Belichtungsenergie der Leuchtdiode LED richtig messen zu können, ist die im nachfolgenden beschriebene Anordnung AA notwendig.

Sie weist einen Vierpol V2 auf. Dieser besteht aus einem Stromspannungswandler mit einem Operationsverstärker OP.

Die Platzverhältnisse um das Fotoelement FE herum sind im dargestellten Fall äußerst beengt, so daß die Auswerteelektronik nicht in unmittelbarer Nähe untergebracht werden kann. Das Fotoelement FE ist deshalb mit einem ebenfalls wegen der Platzverhältnisse äußerst dünnen Leitung mit der Auswerteelektronik verbunden. Diese Leitung besitzt außerdem genügend Flexibilität um die Bewegungen des Schiebers mitzumachen, auf dem das Fotoelement FE sitzt und der zur Vermessung sämtlicher LED's an der gesamten LED Leiste vorbeifahren können muß.

Die Leitung kann bis zu 70 cm lang sein. Der vom Fotoelement gelieferte Strombereich liegt etwa zwischen 0 und 0,1 μA. Ein Stromwert in diesem Bereich muß von der Auswerteelektronik in eine Spannung $\overline{U}$ (Figur 2) zwischen 0 und 1 V am Ausgang des Vierpoles V3 umgewandelt werden, deren Wert nur einen Fehler von weniger als ± 1 % von ihrem möglichen Maximalwert besitzen darf. Bei solchen extremen Anforderungen ist es zweckmäßig evtl. Störeinflüsse auf das Kabel zusätzlich durch besondere elektronische Maßnahmen zu unterdrücken.

Bei der in der Figur 3 dargestellten Verstärkeranordnung (V2) sind zwei Widerstände RG angeordnet, die untereinander gleich sind. Dabei ist über den einen Widerstand der Ausgang des Operationsverstärkers OP auf den negativen Eingang rückgekoppelt. Der positive Eingang des Operationsverstärkers OP liegt über einen Widerstand RG gleicher Größe an Masse. Durch die Anordnung dieses Widerstandes entsteht eine ganz besondere störungsunterdrückende Eigenschaft des Verstärkers.

Störungen, die auf den zwei Zuleitungen zum Fotoelement angekoppelt werden, haben im allgemeinen die Eigenschaft, daß sie da die zwei Leitungen parallel laufen auf beiden Eingängen als Spannung mit gleichem Vorzeichen und zunächst in gleicher Größe anliegen. Ein Operationsverstärker ist gegen identische Spannungen an seinen Eingängen weitgehend unempfindlich, d.h. es entsteht dadurch keine Spannung an seinem Ausgang. Allerdings bleiben die anliegenden Störspannungen nur dann identisch, wenn sie gegen Masse den gleichen Lastwiderstand vorfinden. Dies ist am negativen Eingang der eine Widerstand RG, am positiven Eingang ist es ebenfalls der Widerstand RG, die Werte beider Widerstände RG müssen gleich sein.

Zur Auswertung der Impulsspannung U des Vierpoles V2 ist dem Vierpol V2 ein aktiver Tiefpaß V3 mit einem Aufbau entsprechend der Figur 4 nachgeschaltet. Der Vierpol V3 löst dabei das Problem der hier durch die Kapazität CQ verursachten Trägheit des Fotoelementes.

Dazu muß man von der Vorstellung ausgehen, daß man um die Strahlungsenergie eines Impulses zu messen nicht nur diesen einen Impuls verwendet, sondern die zu vermessende LED1 (Figur 5) mehrere Impulse (LI) der jeweils gleichen Strahlungsenergie in einer bestimmten vorgegebenen Impulsfrequenz abgeben läßt. Dann erst wird zur Vermessung der nächsten LED2 übergegangen mit neuen Lichtimpulsen anderer jedoch untereinander gleicher Strahlungsenergie und vorgegebener Impulsfrequenz.

Verglichen mit der Vermessung eines einzelnen Lichtimpulses kann auf diese Weise eine stark erhöhte Sicherheit gegen Störspitzen auf dem Meßsignal erwartet werden, da sich Einzelstörungen auf mehrere Blitze verteilen können.

Zunächst wird eine LED untersucht die ständig Lichtimpulse abgibt, ohne daß auf eine andere LED übergegangen wird. Im vorliegenden Fall möge sie mit der Frequenz von 11,4 kHz und beispielsweise wie in Figur 5 mit einem Tastverhältnis von $\frac{\Delta t}{T0} = 0,25$ Lichtimpulse abgeben, d.h. sie ist 25 % der Periodendauer T0 eingeschaltet und 75% ausgeschaltet. Der am Ausgang des aktiven Tiefpasses V3 gebildete Mittelwert $\overline{U}$ ist dann direkt ein Maß für die Strahlungsenergie eines einzelnen Lichtimpulses. Das bedeutet, daß das in der Figur 5, Zeile e abstrahiert dargestellte Mittelwertsignal $\overline{U}$, gebildet durch die Anordnung AA, unmittelbar ein Maß für die Strahlungsenergie eines einzelnen Lichtimpulses ist.

Für den Fall, daß von einer LED1 auf die nächste LED2 umgeschaltet wird, um schließlich die gesamte LED-Reihe vermessen zu können, ergibt sich im ungünstigen Fall der Zustand, daß eine LED Lichtimpulse abgibt, während die jeweils darauffolgende überhaupt nicht arbeitet also quasi Lichtimpulse mit einer Strahlungsenergie 0 abgibt. Der Tiefpaß ist so ausgebildet, daß die Mittelwertfunktion $\overline{U}$ mit möglichst wenig Einzelblitzen pro LED gewonnen werden kann. Dann kann für jede einzelne LED während der Zeit an der eine konstante Spannung $\overline{U}$ anliegt, mit einem Analog-Digital-Wandlerbauelement AD (Fig. 1) diese Spannung erfaßt werden und an die Mikroprozessorsteuerung PR digital weitergegeben werden.

Den Tiefpaß wird man bezüglich seines Frequenzganges und damit seiner Grenzfrequenzen der Lichtimpulsfrequenz anpassen. Verwendet werden können dabei aktive und passive Tiefpässe. Ein aktiver Tiefpaß ist jedoch von Vorteil gegenüber einem hier in der Figur 4 schematisch dargestellten passiven RC-Tiefpaß, der unnötig starke Abrundungen bezüglich seines Frequenzganges aufweist.

Als vorteilhaft hat sich ein aktiver Tiefpaß vom Grad n = 2 herausgestellt. Ein Tiefpaß höheren Grades läßt keine im Verhältnis zum höheren Aufwand (weitere OP-Bausteine, Probleme mit Bauteiletoleranzen, Entwicklungsaufwand) gerechtfertigte Verbesserung erwarten, da ein idealer Tiefpaß zwar eine kurze Einschwingzeit besitzt, weil man die Grenzfrequenz höher legen kann, aber zum Überschwingen neigt. Praktische Versuche mit Tiefpässen vom Grad n = 4 haben diese Auffassung bestätigt. Bei der Realisierung des aktiven Tiefpasses hat sich herausgestellt, daß es am günstigsten ist, einen sogenannten Butterworth-Tiefpaß zu realisieren, das Einschwingen zu beobachten und den Tiefpaß dann solange in Richtung Bessel-Tiefpaß zu verändern, bis ein zeitliches Minimum für das Erreichen des eingeschwungenen Zustandes erreicht ist.

Geht man von einer Lichtimpulsfrequenz von 11,4 kHz aus und setzt man als Zeit für die Auswertung des Meßwertes 0,6 ms an, so erhält man als Zeit bei einem bevorzugten Ausführungsbeispiel der Erfindung die für die Vermessung einer LED notwendig ist, den Wert von 2,7 ms. Damit ergibt sich eine Frequenz des Mittelwertes des Sensorsignales von 185 Hz.

Das Signal das der Lichtsensor FE liefert ist normalerweise sehr klein. Es kann deshalb durch sogenannte Brummstörungen entsprechend der Darstellung der Figur 6 BS die von der Netzspannung verursacht werden und durch verschiedenartige andere tieffrequente Störungen verfälscht werden, was die Meßgenauigkeit und damit das Druckbild nachteilig beeinflußt. Diese Störungen können mit einer entsprechend der in Figur 4 dargestellten getasteten Potentialsteuerung GP ganz wesentlich verringert werden. Das Signal von dem Fotoelement FE wird dabei über eine Kapazität C geführt und danach weiter zum Tiefpaß TP. Dem Kondensator C nachgeschaltet und mit ihm verknüpft ist ein elektronischer Schalter ES, der gesteuert von einer Taktquelle TQ zu bestimmten Zeiten, nämlich zu den Zeiten T1 bis TN (Fig. 5), den Ausgang des Kondensators C auf ein bestimmtes Potential zwingt, das beliebig eingestellt werden kann. Dieses Potential kann z.B. auch das Erdpotential sein.

Die Schließzeiten des Schalters ES sind so zu wählen, daß sie in den Zeiten liegen, in denen das Sensorsignal abgeklungen ist oder auf einem festen signalunabhängigen Potential liegt. Die bevorzugte Lage des Schalterschließpunktes ist in der Figur 5, Zeile d T1 bis TN angedeutet. Man erkennt daraus, daß die bevorzugte Schließhäufigkeit gleich der Lichtpulsfrequenz ist. Gegebenenfalls kann für den Schalter eine Subharmonische der Lichtpulsfrequenz verwendet werden. Die Figur 6 zeigt die Wirkung der Potentialsteuerung. Zu den eingezeichneten Zeitpunkten T1 bis TN wird der Schalter geschlossen und ein bestimmtes Potential am Ausgang des Kondensators C In Figur 4 erzwungen Der sinusförmige Störverlauf von Figur 6a reduziert sich dann im idealen Fall auf den darunter gezeichneten Störsignalverlauf b.

Dabei bezeichnet t die Zeit und i den Pegel. Ein Zahlenbeispiel möge die Wirkung demonstrieren. Die sinusförmige Störung habe den Wert 2 von Spitze zu spitze. Die Frequenz beträgt 50 Hz. Die Schalterschließfrequenz beträgt 10 000 Hz. Dann hat die übrigbleibende Störung die Größe 0,062 von Spitze zu Spitze. Es entsteht somit eine Reduzierung der Störung um den Faktor 31,8.

**Patentansprüche**

1. Anordnung zur Erfassung der Strahlungsenergie von lichtemitierenden Halbleiterelementen (LED) unter Verwendung eines im Strahlungsbereich der Halbleiterelemente angeordneten Fotoelementes (FE), daß das von den Halbleiterelementen emittierte Licht empfängt und in Abhängigkeit davon elektrische Ausgangssignale generiert, **dadurch gekennzeichnet**, daß die zu messenden Halbleiterelemente (LED1, LED2) derart angesteuert werden, daß jedes Halbleiterelement eine Folge von Lichtimpulsen (J) gleicher Strahlungsenergie und vorgegebener Folgefrequenz (T0) abgibt und daß Mittel (AA) vorgesehen sind, die die dem jeweiligen Halbleiterelement (LED1, LED2) zugeordnete Ausgangssignale (AS) des Fotoelementes (FE) erfassen und daraus einen Mittelwert ($\overline{U}$) bilden, der als Maß für die Strahlungsenergie des jeweiligen Halbleiterelementes (LED 1, LED2) dient.

2. Anordnung nach Anspruch 1, **dadurch gekennzeichnet**, daß die Mittel als Tiefpaß (V3) ausgebildet sind.

3. Anordnung nach einem der Ansprüche 1 oder 2, **dadurch gekennzeichnet**, daß zur Unterdrückung von tieffrequenten Störungen der elektrischen Ausgangssignale (AS) eine getastete Potentialsteuerungsanordnung (ES) vorgesehen ist, die ein vorgebbares stabiles Bezugspotential der Ausgangssignale festlegt.

4. Anordnung nach Anspruch 3, **dadurch gekennzeichnet**, daß die Tastfrequenz (T1, TN) der Potentialsteuerungsanordnung (ES) derart gewählt wird, daß sie der Lichtimpulsfrequenz (T0) oder einer Subharmonischen der Lichtimpulsfrequenz entspricht.

5. Anordnung zum Abgleich der Strahlungsenergie von lichtemittierenden Elementen (LED) eines optischen Zeichengenerators (ZG) einer elektrofotografischen Druckeinrichtung unter Verwendung eines Fotoelementes (FE), das bei einem zum Abgleich erforderlichen Meßvorgang das Licht der lichtemittierenden Elemente (LED) erfaßt und in Abhängigkeit davon elektrische Ausgangssignale (AS) generiert, **dadurch gekennzeichnet**, daß die lichtemittierenden Elemente (LED) beim Meßvorgang derart angesteuert werden, daß jedes Element eine dem Element zugeordnete Folge von Lichtimpulsen (Li) jeweils gleicher Strahlungsenergie und vorgegebener Folgefrequenz (T0) abgibt und daß Mittel vorgesehen sind, die die einem Element (LED) zugeordneten Ausgangssignale (AS) des Fotoelements (FE) erfassen und daraus einen Mittelwert ($\overline{U}$) bilden, der beim Abgleichvorgang als Maß für die Strahlungsenergie der Elemente (LED) verwendet wird.

6. Anordnung nach Anspruch 6, **dadurch gekennzeichnet**, daß die Mittel als Tiefpaß (V3) ausgebildet sind.

7. Anordnung nach Anspruch 6, **dadurch gekennzeichnet**, daß der Tiefpaß (V3) als aktiver Tiefpaß ausgebildet ist.

8. Anordnung nach einem der Ansprüche 6 oder 7, **dadurch gekennzeichnet**, daß der Tiefpaß (V3) derart ausgebildet ist, daß er die Folgefrequenz (T0) der Lichtimpulse (LI) unterdrückt und nur die bei einer kontinuierlichen Abtastbewegung des Fotoelementes (FE) über die lichtemittierenden Elemente (LED) entstehenden tieffrequenten, als Maß für die Strahlugsenergie der Elemente (LED) dienenden Signalanteile der Ausgangssignale (AS) des Fotoelementes (FE) durchläßt.

9. Anordnung nach einem der Ansprüche 1 bis 8, **dadurch gekennzeichnet**, daß eine einen Differenzverstärker (OP) enthaltende Vierpol-Schaltungsanordnung zur Unterdrückung gleichphasiger Leitungsstörungen auf den Signalleitungen vorgesehen ist.

10. Anordnung nach Anspruch 9, **dadurch gekennzeichnet**, daß der Differenzverstärker (OP) mit seinen Eingängen mit ersten und zweiten Eingängen und sein Ausgang mit einem ersten Ausgang der Vierpol-Schaltungsanordnung verknüpft ist und daß der Differenzverstärker (OP) derart mit Lastwiderständen (RG) beaufschlagt ist, daß bezogen auf ein an einem zweiten Ausgang der Vierpol-Schaltungsanordnung V2 anliegendes Bezugspotential die Eingänge des Differenzverstärkers (OP) den gleichen Lastwiderstand aufweisen.

11. Anordnung nach Anspruch 10, **dadurch gekennzeichnet**, daß ein erster Lastwiderstand (RG) definierte Größe zwischen dem ersten Eingang und dem Ausgang des Differenzverstärkers (OP) und ein zweiter Lastwiderstand gleicher Größe (RG) zwischen dem zweiten Eingang des Differenzverstärkers (OP) und dem Bezugspotential angeordnet ist.

12. Anordnung nach einem der Ansprüche 5 oder 6, **dadurch gekennzeichnet**, daß zur Unterdrückung von tieffrequenten Störungen (BI) der elektrischen Ausgangssignale (AS) eine getastete Potentialsteuerungsanordnung (ES) vorgesehen ist, die ein vorgebbares Bezugspotential der Ausgangssignale festlegt.

13. Anordnung nach Anspruch 7, **dadurch gekennzeichnet**, daß die Tastfrequenz (T1, T2, TN) der Potentialsteuerungsanordnung (ES) derart gewählt wird, daß sie der Lichtimpulsfrequenz (T0) oder einer Subharmonischen der Lichtimpulsfrequenz (T0) entspricht.

## Claims

1. Arrangement for detecting the radiant energy of light-emitting semiconductor elements (LED) by using a photoelement (FE) arranged within the area of radiation of the semiconductor elements, which receives the light emitted by the semiconductor elements and generates electrical output signals as a function of this light, characterised in that the semiconductor elements (LED1, LED2) to be measured are activated in such a manner that each semiconductor element outputs a sequence of light pulses (J) of the same radiant energy and predetermined repetition rate (T0) and means (AA) are provided which detect the output signals (AS), associated with the respective semiconductor element (LED1, LED2), of the photoelement (FE) and form from these a mean value ($\overline{U}$) which is used as a measure of the radiant energy of the respective semiconductor element (LED1, LED2).

2. Arrangement according to Claim 1, characterised in that the means are constructed as low-pass filter (V3).

3. Arrangement according to one of Claims 1 or 2, characterised in that a gated potential control arrangement (ES), which defines a predeterminable stable reference potential of the output signals, is provided for suppressing low-frequency interference in the electrical output signals (AS).

4. Arrangement according to Claim 3, characterised in that the gating frequency (T1, TN) of the potential control arrangement (ES) is selected in such a manner that it corresponds to the light pulse frequency (T0) or to a subharmonic of the light pulse frequency.

5. Arrangement for calibrating the radiant energy of light-emitting elements (LED) of an optical character generator (ZG) of an electrophotographic printer, using a photoelement (FE) which detects the light of the light-emitting elements (LED) in a measuring process required for the calibration and generates electrical output signals (AS) as a function of this light, characterised in that the light-emitting elements (LED) are activated during the measuring process in such a manner that each element emits a sequence, associated with the element, of light pulses (Li) of in each case the same radiant energy at a predetermined repetition rate (T0) and means are provided which detect the output signals (AS), associated with an element (LED), of the photoelement (FE) and form from these a mean value ($\overline{U}$) which is used as a measure of the radiant energy of the elements (LED) during the calibration process.

6. Arrangement according to Claim 6, characterised in that the means are constructed as low-pass filter (V3).

7. Arrangement according to Claim 6, characterised in that the low-pass filter (V3) is constructed as active low-pass filter.

8. Arrangement according to one of Claims 6 or 7, characterised in that the low-pass filter (V3) is constructed in such a manner that it suppresses the repetition rate (T0) of the light pulses (LI) and only passes the low-frequency signal components, used as a measure of the radiant energy of the elements (LED), of the output signals (AS) of the photoelement (FE), produced during a continuous scanning movement of the photoelement (FE) over the light-emitting elements (LED).

9. Arrangement according to one of Claims 1 to 8, characterised in that a four-terminal circuit arrangement containing a differential amplifier (OP) is provided for suppressing in-phase line interference on the signal lines.

10. Arrangement according to Claim 9, characterised in that the inputs of the differential amplifier (OP) are logically combined to first and second inputs and its output is logically combined to a first output of the four-terminal circuit arrangement and load resistors (RG) are connected to the differential amplifier (OP) in such a manner that, referred to a reference potential present at a second output of the four-terminal circuit arrangement (V2), the inputs of the differential amplifier (OP) exhibit the same load resistance.

11. Arrangement according to Claim 10, characterised in that a first load resistor (RG) of defined magnitude is arranged between the first input and the output of the differential amplifier (OP) and a second load resistor of the same magnitude (RG) is arranged between the second input of the differential amplifier (OP) and the reference potential.

12. Arrangement according to one of Claims 5 or 6, characterised in that a gated potential control arrangement (ES), which defines a predeterminable reference potential of the output signals, is provided for suppressing low-frequency interference (BI) in the electrical output signals (AS).

13. Arrangement according to Claim 7, characterised in that the gating frequency (T1, T2, TN) of the potential control arrangement (ES) is selected in such a manner that it corresponds to the light pulse frequency (T0) or to a subharmonic of the light pulse frequency (T0).

## Revendications

1. Dispositif pour capter l'énergie de rayonnement d'éléments semiconducteurs photoémissifs (LED) moyennant l'utilisation d'un élément photoélectrique (SE) disposé dans la zone de rayonnement des éléments semiconducteurs et qui reçoit la lumière émise par les éléments semiconducteurs et génère, en fonction de cela, des signaux électriques de sortie,
caractérisé par le fait que les éléments semiconducteurs (LED1, LED2) devant être mesurés sont commandés de telle sorte que chaque élément semiconducteur délivre une suite d'impulsions de lumière (J) possédant une même énergie de rayonnement et une fréquence de récurrence prédéterminée (T0), et qu'il est prévu deux moyens (AA), qui captent les signaux de sortie (AS) de l'élément photoélectrique, qui sont associés à l'élément semiconducteur respectif (LED1, LED2), et en forment une valeur moyenne ($\overline{U}$), qui sert de mesure de l'énergie de rayonnement de l'élément semiconducteur respectif.

2. Dispositif suivant la revendication 1, caractérisé par le fait que les moyens sont agencés sous la forme d'un filtre passe-bas (V3).

3. Dispositif suivant l'une des revendications 1 ou 2, caractérisé par le fait que pour la suppression de parasites basse fréquence des signaux électriques de sortie (AS), il est prévu un dispositif à déclenchement impulsionnel de commande de potentiel (ES), qui fixe un potentiel de référence stable, pouvant être prédéterminé, des signaux de sortie.

4. Dispositif suivant la revendication 3, caractérisé par le fait que la fréquence de récurrence (T1, TN) du dispositif de commande de potentiel (ES) est choisie de manière à correspondre à la fréquence des impulsions de lumière (T0) ou à un sous-harmonique de la fréquence des impulsions de lumière.

5. Dispositif pour équilibrer l'énergie de rayonnement d'éléments photoémissifs (LE2) d'un générateur optique de caractères (ZG) d'un dispositif d'impression électrophotographique moyennant l'utilisation d'un élément photoélectrique (FE), qui, dans le cas d'une opération de mesure nécessaire pour l'équilibrage, détecte la lumière des éléments photoémissifs (LED) et produit, en fonction de cela, des signaux de sortie électrique (AS), caractérisé par le fait que les éléments photoémissifs (LED) sont commandés lors de l'opération de mesure de manière que chaque élément délivre une suite, associée à cet élément, d'impulsions de lumière (Li) possédant respectivement la même énergie de rayonnement et une fréquence de récurrence prédéterminée (T0), et qu'il est prévu des moyens qui détectent les signaux de sortie (AS) de l'élément photoélectrique (FE), qui sont associés à l'élément (LED), et en forment une valeur moyenne ($\overline{U}$) qui est utilisée, lors de l'opération d'équilibrage, comme mesure de l'énergie de rayonnement des éléments (LED).

6. Dispositif suivant la revendication 6, caractérisé par le fait que les moyens sont réalisés sous la forme d'un filtre passe-bas (B3).

7. Dispositif suivant la revendication 6, caractérisé par le fait que le filtre passe-bas (B3) est agencé sous la forme d'un filtre passe-bas actif.

8. Dispositif suivant l'une des revendications 6 ou 7, caractérisé par le fait que le filtre passe-bas (B3) est agencé de telle sorte qu'il supprime la fréquence de récurrence (T0) des impulsions de lumière (LI) et laisse passer uniquement les composantes des signaux de sortie (AS) de l'élément photoélectrique (FE) à basse fréquence, qui apparaissent lors d'un déplacement continu d'exploration d'éléments photoélectriques (FE) au-dessus des éléments photoémissifs (LED) et sont utilisées comme mesure de l'énergie de rayonnement des éléments (LED).

9. Dispositif suivant l'une des revendications 1 à 8, caractérisé par le fait qu'il est prévu un montage quadripolaire comportant un amplificateur différentiel (OP) pour supprimer des perturbations de ligne en phase dans les lignes de transmission de signaux.

10. Dispositif suivant la revendication 9, caractérisé par le fait que l'amplificateur différentiel (OP) est raccordé par ses entrées à des première et seconde entrées et par sa sortie à une première sortie du montage quadripolaire, que l'amplificateur différentiel (OP) est chargé par des résistances de charges (RG) de telle sorte que, par rapport à un potentiel de référence appliqué à une seconde sortie du montage quadripolaire (V2), les entrées de l'amplificateur différentiel (OP) possèdent la même résistance de charge.

11. Dispositif suivant la revendication 10, caractérisé par le fait qu'une première résistance de charge (RG) possédant une valeur définie est disposée entre la première entrée et la sortie de l'amplificateur différentiel (OP) et qu'une seconde résistance de charge de même valeur (RG) est disposée entre la seconde entrée de l'amplificateur différentiel (OP) et le potentiel de référence.

12. Dispositif suivant l'une des revendications 5 ou 6, caractérisé par le fait que pour supprimer des perturbations basse fréquence (BI) des signaux électriques de sortie (SA), il est prévu un dispositif à déclenchement impulsionnel de commande du potentiel (ES), qui détermine un potentiel de référence, pouvant être prédéterminé, des signaux de sortie.

13. Dispositif suivant la revendication 7, caractérisé par le fait que la fréquence de récurrence (T1,T2,TN) du dispositif de commande de potentiel (ES) est choisi de manière à correspondre à la fréquence des impulsions de lumière (T0) ou à un harmonique inférieur de la fréquence des implusions de lumière (T0).

FIG 1

## FIG 2

FE

V1

CQ    R

AA

V2    U    V3    U̅

## FIG 3

V2

RG

OP

U

RG

## FIG 4

V3

C

ES

U

U̅

TP

TQ    GP

FIG 5a

FIG 5b

FIG 5c

FIG 5d

FIG 5e

FIG 6a

FIG 6b